# EUROPEAN PATENT APPLICATION

(11) **EP 3 241 707 A1**
(43) Date of publication of application: **08.11.2017**
(21) Application number: 17169202.3
(22) Date of filing: 03.05.2017
(51) Int. Cl.: B60P 1/64, B60P 1/16, F16L 39/00

(54) **APPARATUS FOR THE AUTOMATIC CONNECTION OF COUPLINGS FOR HYDRAULIC UTILITIES ON TRUCKS PROVIDED WITH INTERCHANGEABLE BODIES**

(30) Priority: 04.05.2016 IT UA20163142
(71) Applicant: Pris-Mag S.r.l., 20871 Vimercate (MB) (IT)
(72) Inventor: SALA, Paolo, 20871 VIMERCATE MB (IT); SALA, Alessandro, 20871 VIMERCATE MB (IT)
(74) Representative: Mittler, Andrea

(57) **Abstract**

There is described an apparatus comprising a male plate (5) arranged on a truck (1) and a female plate (6) arranged on a interchangeable body (2); the male plate houses a first plurality of couplings (3, 4) and the female plate houses a second plurality of couplings (4, 3) complementary to the first one, and the first plurality of couplings can be connected to the second plurality of couplings automatically and simultaneously to the connection of the interchangeable body with the truck. The apparatus comprises means (10) configured to fix in a rigid manner at least one quick coupling of one of said first plurality of couplings and said second plurality of couplings on the respective male plate or on the respective female plate.

## Description

The present invention relates to an apparatus for the automatic connection of couplings for hydraulic utilities on trucks provided with interchangeable bodies.

In the above technical field, "bodies" or "bodyworks" or "superstructures" refer to structures attached to the chassis of a truck to be used for carrying out a particular type of transport or handling on site.

Examples of trucks with different bodies may be: fixed bodywork, tipper bodies, cranes, cement mixers, excavators, drainage tanks, and others. The aforesaid bodies may be fixed permanently to the vehicle so as to limit it to a single use or temporarily for their transport and for some particular purpose, then the designated bodies can be removed, leaving the vehicle ready for a different use.

Obviously, a truck constructed for carrying demountable bodies is able to offer a more versatile service than one not capable of doing so; moreover, said truck has more versatility if the bodies are also interchangeable. The fact of constructing a truck adapted to carry such interchangeable bodies involves the addition of hydraulic devices to the truck chassis with which the body is maneuvered, means for locking the body in the chassis, means for releasing the body from the chassis and for supplying hydraulic couplings on board the body; the means may be of several types, such as hydraulic, pneumatic, electric.

It is known to use devices for the automatic connection of a plurality of couplings of hydraulic units belonging to the body with a plurality of couplings of hydraulic connections belonging to the truck.

EP 1775159 describes a truck for transporting interchangeable bodies comprising a male plate, connected to the chassis of the truck and adapted to house a plurality of couplings connected to the hydraulic supply circuit of the truck; the male side automatically connects to a female plate, connected to the body and adapted to house a plurality of couplings connected to the body utilities. The couplings comprise abutment collars the purpose of which it is to discharge the forces generated upon connection of the male and female couplings of their respective plates.

However, the couplings are connected to the male plate in a flexible manner, by means of elastic retaining rings; thereby, the connection between male plate and female plate can only occur with plates orthogonal to the axis of the truck.

In view of the prior art, it is the object of the present invention to provide an apparatus for the automatic connection of couplings for hydraulic utilities on trucks provided with interchangeable bodies which is more effective than those known.

According to the present invention, this object is achieved by an apparatus comprising a male plate arranged on a truck and a female plate arranged on an interchangeable body, said male plate housing a first plurality of couplings and said female plate housing a second plurality of couplings which is complementary to the first plurality of couplings, said first plurality of couplings being configured to be automatically connected to the second plurality of couplings simultaneously to the connection of the interchangeable body with the truck, characterized by comprising means configured to fix in a rigid manner at least one of said first plurality of couplings and said second plurality of couplings on the respective male plate or on the respective female plate.

Said fixing means preferably comprise a plurality of ring nuts configured to be engaged with the corresponding threaded ends of the first plurality of couplings or the second plurality of couplings when the first plurality of couplings is engaged with a plurality of holes of the male plate or the second plurality of couplings is engaged with a plurality of holes of the female plate.

The features and advantages of the present invention will become more apparent from the following detailed description of a practical embodiment thereof, made by way of a non-limiting example with reference to the accompanying drawings, in which:
figure 1 is a diagrammatic view of a truck with male plate provided with couplings for hydraulic utilities of bodies according to an embodiment of the present invention and of the body provided with a female plate uncoupled from the male plate;
figure 2 is a diagrammatic view of the truck and body in figure 1 with female plate coupled to the male plate;
figure 3 is a more detailed, cross-sectional view of the male and female plates in figure 1;
figure 4 is a more detailed, cross-sectional view of the male and female plates in figure 2;
figure 5 is a more detailed, cross-sectional view of male and female plates inclined with respect to the plane defined by the chassis of the truck;
figure 6 is a diagrammatic view of a body lifting apparatus provided with the male plate according to a variant of the present invention;
figure 7 is a diagrammatic view of the device for translating the interchangeable body on the chassis of the truck in figures 1 and 2;
figures 8-10 are more detailed, cross-sectional views of the male and female plates in figure 1 according to variants of the present invention.

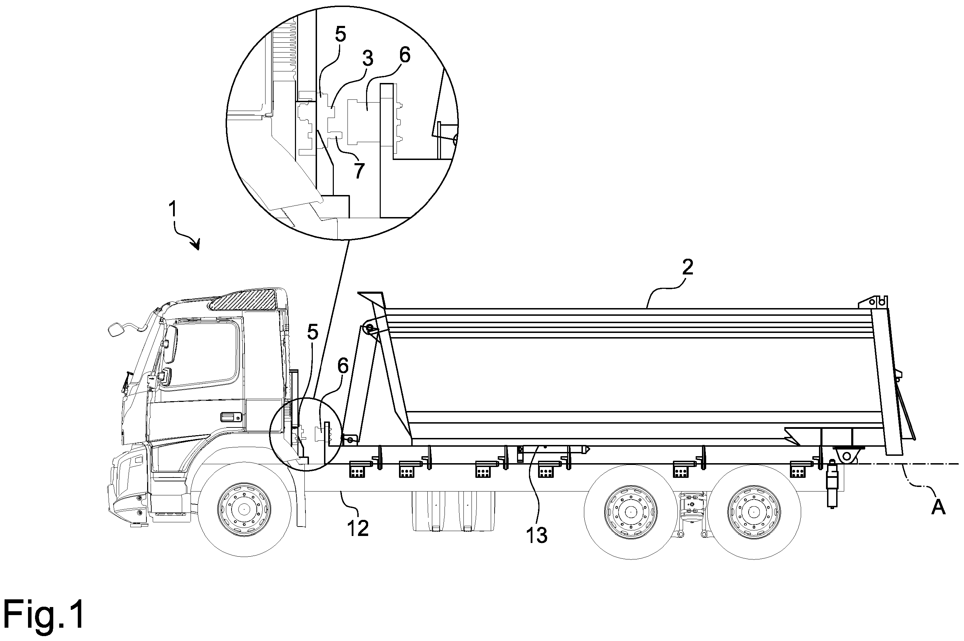

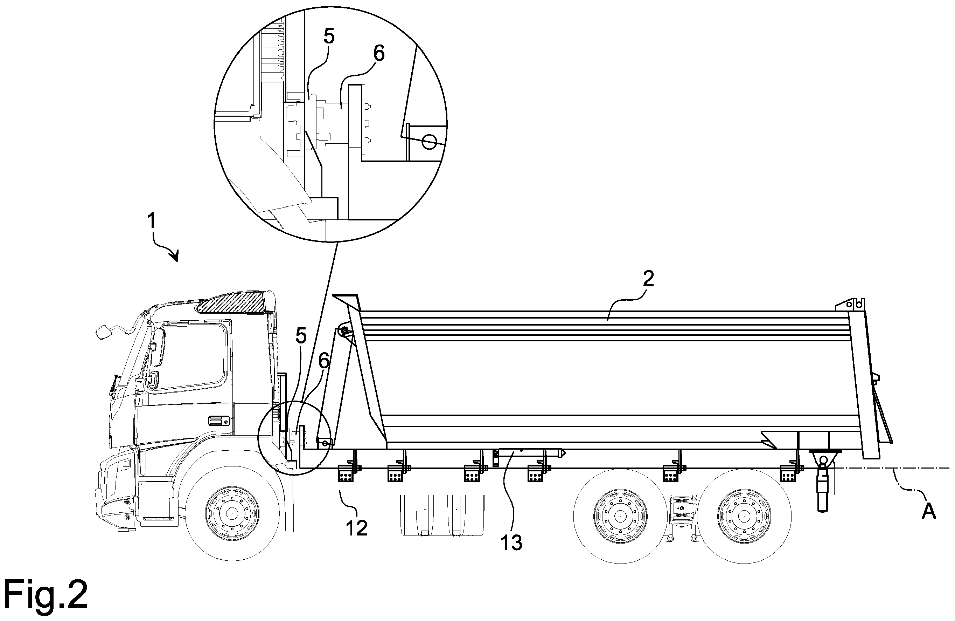

With reference to figures 1-5, a truck 1 for transporting an interchangeable body 2 is shown, according to an embodiment of the invention.

Truck 1 comprises a chassis 12 extending along a longitudinal axis A and defines a loading platform on which the interchangeable body 2 is placed.

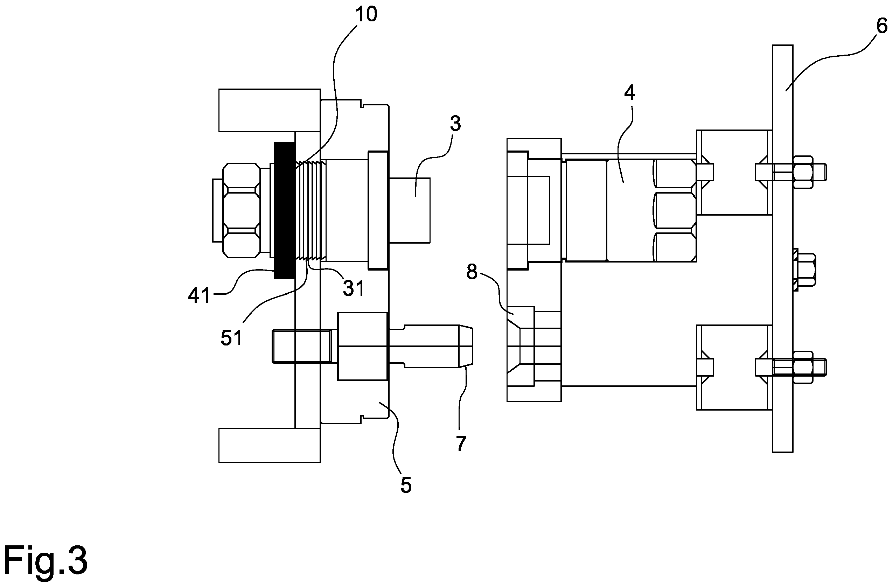

Truck 1 also comprises a plurality of couplings 3 (preferably quick couplings), shown in figure 3, normally connected to a hydraulic supply circuit present on board the truck and adapted to connect to a plurality of couplings 4 (preferably quick couplings) on board the interchangeable body 2, which are complementary to couplings 3 and normally connected to hydraulic utilities.

Couplings 3 are arranged in a male plate 5 fixed to chassis 12 of the truck, preferably orthogonally aligned with respect to the plane of plate 5, while couplings 4 are arranged in a female plate 6 integral with the interchangeable body 2 and preferably orthogonally aligned with respect to the plane of plate 6.

Means 7 are provided for centering the male plate 5 which can be combined with corresponding centering means 8 of the female plate 6; preferably, the centering means 7 of the male plate 5 are pins engageable with the holes 8 with axis orthogonal to the plane of the female plate 6.

The couplings 3 of plate 5 and the couplings 4 of plate 6 are preferably flat-face couplings. They are couplings having ends which, in non-connected condition, are completely closed; thereby, they have no oil leaks.

Moreover, the couplings 3 of plate 5 and the couplings 4 of plate 6 are manufactured so as not to leak oil during the connection and disconnection operations.

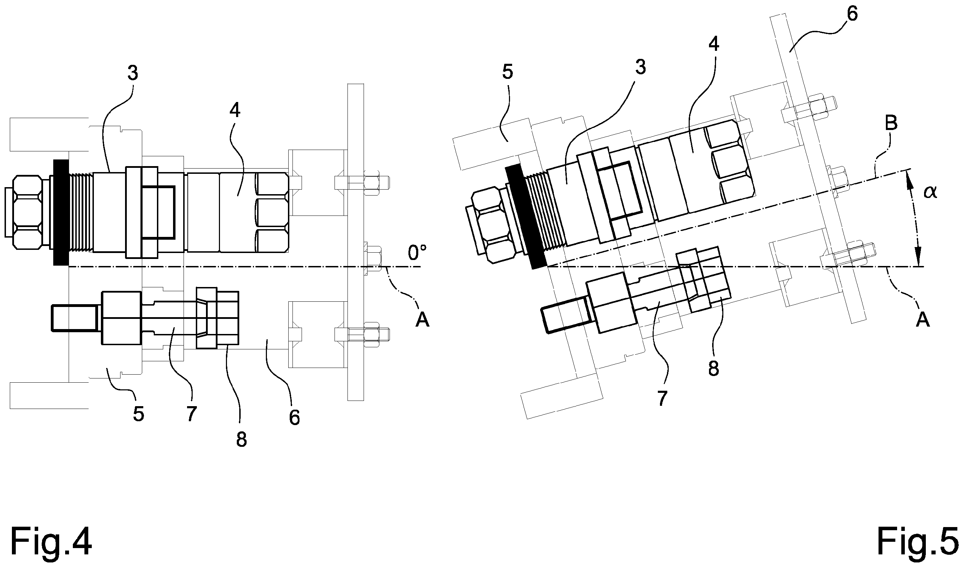

The connection of the couplings 3 of plate 5 with the couplings 4 of plate 6 (figure 4) is obtained by anchoring the interchangeable body 2 to truck 1.

This connection is maintained as long as the interchangeable body 2 is anchored to the chassis 12 of truck 1, therefore, no locking means are provided.

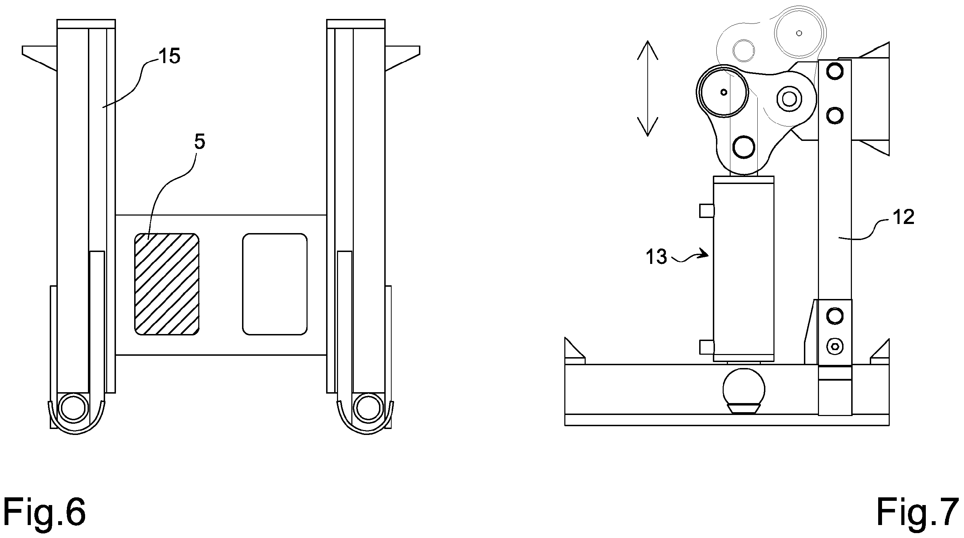

The automatic connection of the couplings 3 of plate 5 with the couplings 4 of plate 6 takes place simultaneously to the installation of the interchangeable body 2 on truck 1. The installation takes place by arranging an interchangeable body 2 on the chassis 12 of the truck and then translating it, by means of the translating device 13 arranged in the chassis 12 of the truck and better seen in figure 7, for anchoring the interchangeable body 2 to the truck chassis and automatically connecting the couplings 3 of plate 5 to the couplings 4 of plate 6. During the stroke of the interchangeable body 2 on the chassis 12 of truck 1, the plurality of couplings 3 must be kept aligned with the plurality of couplings 4 during the translation so that, in the last stretch of the translation, the connection of the couplings takes place.

Operating in the reverse order automatically disconnects the couplings 3 of plate 5 from the couplings 4 of plate 6, with the removal of the interchangeable body 2 from the chassis 12 of truck 1.

Fixing means 10 are provided, adapted to fix in a rigid manner at least one of couplings 3 and/or of couplings 4 with the respective male plate 5 of truck 1 or with the respective female plate 6 of the interchangeable body. This allows to have a perfectly coaxial system.

Said fixing means preferably comprise ring nuts 41 engageable with the threaded ends 31 of the couplings 3 which can be fitted into the holes 51 of plate 5 or ring nuts 42 engageable with the threaded parts of the couplings 4 which can be fitted into the holes 52 of the female plate 6. The engagement of the threaded ends 31 of couplings 3 with the holes 51 of plate 5 and then with the ring nuts 41 allows to fix in a rigid manner the couplings 3 with the male plate 5 of truck 1, while the engagement of the threaded parts protruding from the holes 52 of the female plate with the ring nuts 42 allows to fix in a rigid manner the couplings 4 with the female plate 6 of the interchangeable body.

Moreover, in the case of rigid fixing of the plurality of couplings 3 with the male plate 5, the male plate 5 may be oriented according to any inclination with respect to the plane defined by the chassis 12 of the truck, as shown in figure 5. The inclination angle α of an axis B orthogonal to the male plate 5 with respect to axis A can range from 0° to 90°; thereby, the male plate 5 can always be coupled to the female plate 6 even if both are oriented at an angle other than 0°.

According to a variant of the present invention, the male plate can be arranged on a structure 15 connected to the chassis of truck 1 and adapted to lift the interchangeable body 2, as shown in figure 6.

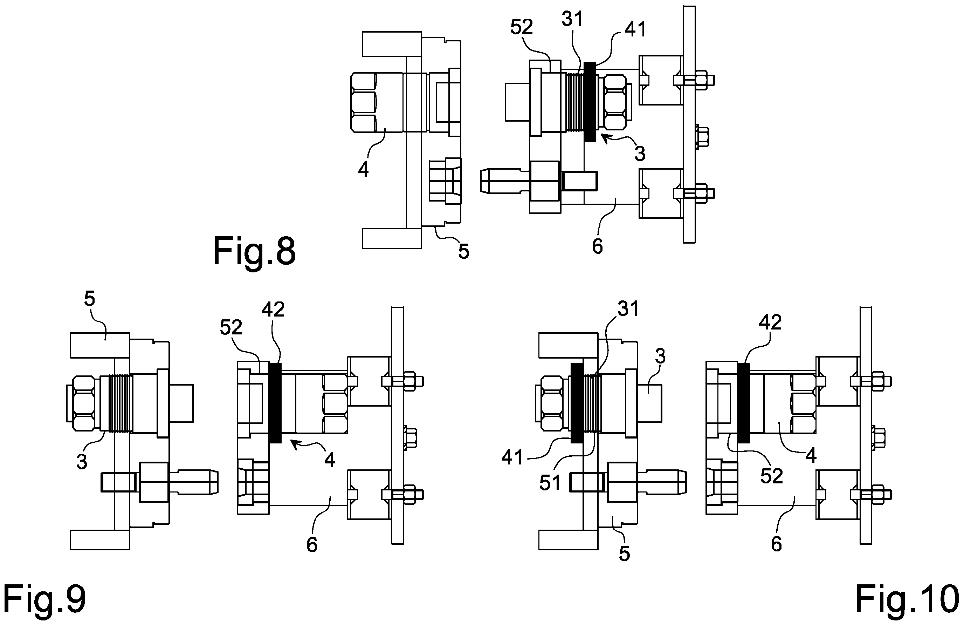

According to another variant of the invention, the couplings 3 can be rigidly fixed in the female plate 6 and the couplings 4 can be fixed in a non-rigid manner in the male plate 5, as shown in figure 8. Said fixing means preferably comprise ring nuts 41 engageable with the threaded ends 31 of the couplings 3 which can be fitted into the holes 52 of plate 6.

According to a further variant of the invention, the couplings 4 can be rigidly fixed in the female plate 6 and the couplings 3 can be fixed in a non-rigid manner in the male plate 5, as shown in figure 9. Said fixing means preferably comprise ring nuts 42 engageable with the threaded ends of the couplings 4 which can be fitted into the holes 52 of plate 6.

According to yet another variant of the invention, the couplings 4 can be rigidly fixed in the female plate 6 and the couplings 3 can be rigidly fixed in the male plate 5, as shown in figure 10. Said fixing means preferably comprise ring nuts 42 engageable with the threaded ends of the couplings 4 which can be fitted into the holes 52 of plate 6 and ring nuts 41 engageable with the threaded ends 31 of the couplings 3 which can be fitted into the holes 51 of plate 5.

## Claims

1. Apparatus comprising a male plate (5) arranged on a truck (1) and a female plate (6) arranged on an interchangeable body (2), said male plate housing a first plurality of couplings (3, 4) and said female plate housing a second plurality of couplings (4, 3) which is complementary to the first plurality of couplings (3, 4), said first plurality of couplings (3, 4) being configured to be automatically connected to the second plurality of couplings (4, 3) simultaneously to the connection of the interchangeable body with the truck, **characterized by** comprising means (10) configured to fix in a rigid way at least one coupling of one between the first plurality of couplings or the second plurality of couplings on the respective male plate or on the respective female plate.

2. Apparatus according to claim 1, **characterized in that** said fixing means comprise at least one ring nut (41, 42) configured to be engaged with the corresponding threaded end (31) of said at least one coupling of the first plurality of couplings or the second plurality of couplings when the first plurality of couplings is engaged with a plurality of holes (51) of the male plate (5) or the second plurality of couplings is engaged with a plurality of holes (52) of the female plate (6).

3. Apparatus according to claim 1, **characterized in that** said fixing means are configured to fix in a rigid way at least one between the first plurality of couplings or the second plurality of couplings on the respective male plate or on the respective female plate.

4. Apparatus according to claim 1, **characterized in that** said fixing means comprise a plurality of ring nuts (41, 42) configured to be engaged with the corresponding threaded ends (31) of the first plurality of couplings or the second plurality of couplings when the first plurality of couplings is engaged with a plurality of holes (51) of the male plate (5) or the second plurality of couplings is engaged with a plurality of holes (52) of the female plate (6).

5. Truck comprising a male plate (5) configured for housing a first plurality of couplings (3, 4), the first plurality of couplings (3, 4) being adapted to be automatically connected with a second plurality of couplings (4, 3), which is complementary to the first plurality of coupling (3, 4) and belongs to an interchangeable body (2), simultaneously to the connection of the interchangeable body with the truck, **characterized by** comprising means (10) configured to fix in a rigid way at least one coupling of said first plurality of couplings on said male plate.

6. Truck according to claim 5, **characterized in that** said fixing means comprise at least one ring nut (41, 42) configured to be engaged with the corresponding threaded end (31) of said at least one coupling of the first plurality of couplings when the first plurality of couplings is engaged with a plurality of holes (51) of the male plate (5).

7. Truck according to claim 5, **characterized in that** said fixing means are configured to fix in a rigid way the first plurality of couplings on the male plate.

8. Interchangeable body (2) comprising a female plate (6) configured for housing a first plurality of coupling (3, 4), the first plurality of couplings (3, 4) being adapted to be automatically connected with a second plurality of couplings (4, 3), which is complementary to the first plurality of coupling (3, 4) and belongs to a truck (1), simultaneously to the connection of the interchangeable body with the truck, **characterized by** comprising means (10) configured to fix in a rigid way at least one coupling of said first plurality of couplings on said female plate.

9. Interchangeable body (2) according to claim 8, **characterized in that** said fixing means comprise at least one ring nut (41, 42) configured to be engaged with the corresponding threaded end (31) of said at least one coupling of the first plurality of couplings when the first plurality of couplings is engaged with a plurality of holes (52) of the female plate (6).

10. Interchangeable body (2) according to claim 8, **characterized in that** said fixing means are configured to fix in a rigid way the first plurality of couplings on the female plate.
